(19) Europäisches Patentamt
European Patent Office
Office européen des brevets

(11) **EP 2 707 245 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(21) Anmeldenummer: **12719712.7**

(22) Anmeldetag: **08.05.2012**

(51) Int Cl.:
**B60L 11/00** *(2006.01)*          **B60L 11/18** *(2006.01)*
**H02M 1/00** *(2006.01)*          **H02P 21/00** *(2016.01)*

(86) Internationale Anmeldenummer:
**PCT/EP2012/058420**

(87) Internationale Veröffentlichungsnummer:
**WO 2012/152780 (15.11.2012 Gazette 2012/46)**

(54) **LEISTUNGSELEKTRONISCHE VORRICHTUNG UND STEUERVERFAHREN FÜR EINE ELEKTRISCHE MASCHINE UND FÜR ELEKTRISCHE ENERGIESPEICHER**

POWER ELECTRONICS APPARATUS AND CONTROL METHOD FOR AN ELECTRIC MACHINE AND FOR ELECTRICAL ENERGY STORES

DISPOSITIF ÉLECTRONIQUE DE PUISSANCE ET PROCÉDÉ DE COMMANDE POUR UN MOTEUR ÉLECTRIQUE ET DES ACCUMULATEURS D'ÉNERGIE ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2011   DE 102011075560**

(43) Veröffentlichungstag der Anmeldung:
**19.03.2014   Patentblatt 2014/12**

(73) Patentinhaber: **Bayerische Motoren Werke Aktiengesellschaft**
**80809 München (DE)**

(72) Erfinder: **GORKA, Matthias**
**80935 München (DE)**

(56) Entgegenhaltungen:
EP-A1- 1 834 825          EP-A2- 0 588 388
EP-A2- 1 710 115          US-A1- 2009 034 308
US-A1- 2010 096 926

- LU S. ET AL.: "A NEW METHOD OF UTILIZING ULTRA-CAPACITOR ENERGY SOURCES IN HYBRID ELECTRIC VEHICLES OVER A WIDE SPEED RANGE", APPLIED POWER ELECTRONICS CONFERENCE, APEC 2007, 22ND ANNUAL IEEE, 2007, pages 222-228,
- LU S. ET AL.: "HIGH EFFICIENCY ENERGY STORAGE SYSTEM DESIGN FOR HYBRID ELECTRIC VEHICLE WITH MOTOR DRIVE INTEGRATION", INDUSTRY APPLICATIONS CONFERENCE, 2006, 41ST IAS ANNUAL MEETING CODNFERENCE RECORD OF THE 2006 IEEE, vol. 5, 2006, pages 2560-2567,

**Beschreibung**

Die Erfindung betrifft eine leistungselektronische Vorrichtung und ein Steuerverfahren für eine elektrische Maschine und für elektrische Energiespeicher, ein Steuerverfahren zum Betrieb der leistungselektronischen Vorrichtung, sowie ein Kraftfahrzeug umfassend die leistungselektronische Vorrichtung, die elektrische Maschine und die elektrischen Energiespeicher.

Hybrid- oder Elektrofahrzeuge verfügen über einen elektrifizierten Antriebsstrang. Dieser weist einen ersten Energiespeicher auf, z.B. eine sekundäre Lithium-Ionen-Batterie, sowie eine elektrische Maschine, z.B. eine permanenterregte Synchronmaschine, die motorisch und generatorisch betrieben werden kann.

Zwischen dem Energiespeicher und der elektrischen Maschine vermittelt eine Leistungselektronik, die den Energie- und Leistungsfluss im elektrischen Antriebsstrang regelt. Diese Leistungselektronik besteht üblicherweise aus einem bidirektionalen Gleich- bzw. Wechselrichter zum motorischen und generatorischen Betrieb der elektrischen Maschine.

Ein Hybrid- oder Elektrofahrzeug verfügt neben dem ersten Energiespeicher über einen zweiten Energiespeicher, der in erster Linie Komponenten und Verbraucher speist, die aus dem Bordnetz eines Kraftfahrzeugs mit konventionellem, verbrennungsmotorischem Antrieb bekannt sind. Dies können etwa ein Radio oder die Fahrzeugaußenbeleuchtung sein.

Der zweite Energiespeicher wird in einem Hybrid- oder Elektrofahrzeug primär über einen Gleichstromsteller, der auch als DC-DC-Wandler bezeichnet wird, aus dem Hochvoltbordnetz gespeist. Der Gleichstromsteller kann unidirektional oder bidirektional ausgeführt sein. Bei dem zweiten Energiespeicher kann es sich insbesondere um eine Supercap-Speichereinheit oder eine 12-Volt Blei-Säure-Batterie handeln. Auch eine Brennstoffzelle oder Lithium-Ionen-Batterie kann es eingesetzt werden.

Üblicherweise sind der Inverter und der Gleichstromsteller voneinander funktional und baulich getrennt ausgeführt. Mögliche Synergieeffekte dieser leistungselektronischen Komponenten bleiben dadurch ungenutzt.

Dem Stand der Technik sind Ansätze entnehmbar, die diesem Nachteil begegnen. So ist etwa dem Dokument "A new method of utilizing ultra-capacitor energy sources in hybrid electric vehicles over a wide speed range" von Lu et al., Applied Power Electronics Conference, AEPC 2007, 22nd Annual IEEE, 2007 Seiten 222-228 eine Energiespeichertopologie für ein Fahrzeug Geänderte Beschreibung zu 12719712.7-1927 (Ersetzungsseiten, Änd.-fassung) 29.01.2018

entnehmbar, die einen Ultrakondensator in eine Energiespeichertopologie mit einem weiteren Energiespeicher einbringt. Der Energiespeicher und der Ultrakondensator sind ohne einen DC/DC-Konverter mit einem Wechselrichter verbunden, über den eine elektrische Maschine gespeist wird. Leistungsspitzen bei der Traktion werden bei dieser Topologie von dem Ultrakondensator gestützt.

Weiterhin ist in der Schrift DE10 2008 037 064 A1 eine Schaltungsanordnung beschrieben, an die zwei elektrischen Energiespeicher anschließbar sind, wobei einer der Energiespeicher zumindest zweitweise eine elektrische Maschine versorgt. Energieausgleichsvorgänge werden durch die Schaltungsanordnung ermöglicht. Zumindest zeitweise vereint die Schaltungsanordnung aus der Schrift DE 10 2008 037 064 A1 mit anderen Worten ausgedrückt die Funktionalitäten eines Gleichstromstellers und eines Inverters. Hierbei werden die üblichen Regelungskonzepte von Invertern für Elektromaschinen weiterverwendet.

Es ist eine Aufgabe der Erfindung, eine verbesserte leistungselektronische Vorrichtung und insbesondere ein verbessertes Steuerverfahren der leistungselektronischen Vorrichtung für eine elektrische Maschine und elektrische Energiespeicher anzugeben.

Gelöst wird diese Aufgabe durch eine leistungselektronische Vorrichtung und ein Steuerverfahren für eine elektrische Maschine gemäß Anspruch 1 und den abhängigen Ansprüchen. Vorteilhafte Ausführungsformen und Weiterbildungen der Erfindung gehen ebenfalls aus den abhängigen Ansprüchen hervor.

Erfindungsgemäß ist die leistungselektronische Vorrichtung, die einen Wechselrichter, an den eine elektrische Maschine anschließbar ist, und zumindest eine Halbbrücke, an die mindestens zwei elektrische Energiespeicher anschließbar sind, umfasst, dadurch charakterisiert, dass die leistungselektronische Vorrichtung eingerichtet ist, die zumindest eine Halbbrücke zwischen zwei Zuständen zu schalten, wobei jeweils einer der beiden Halbbrückenschalter geschlossen und der jeweils andere der beiden Halbbrückenschalter geöffnet ist, um jeweils einen der mindestens zwei elektrischen Energiespeicher mit dem Wechselrichter zu verbinden, so dass mindestens einer der mindestens zwei elektrischen Energiespeicher zumindest zeitweise die elektrische Maschine versorgt, und dass mindestens einer der elektrischen Energiespeicher zumindest zeitweise mindestens einen anderen Energiespeicher der mindestens zwei elektrischen Energiespeicher über die elektrische Maschine und zumindest über die Halbbrücke lädt.

Dies ist gleichbedeutend damit, dass mindestens einer der elektrischen Energiespeicher die elektrische Maschine mit elektrischer Leistung speist und mindestens einer der elektrischen Energiespeicher mindestens einen weiteren der elektrischen Energiespeicher lädt. Bei zwei Halbbrücken oder mehr als zwei Halbbrücken, ist jede dieser Halbbrücken mit zumindest einem elektrischen Energiespeicher verbunden, wobei jeweils ein Schalter der Halbbrücken und die elektrischen Energiespeicher parallel geschaltet sind. Ein Ladestrom kann dann entweder über keine Halbbrücke oder über beliebig viele Halbbrücken geführt werden.

Somit wird der Vorteil erzielt, dass die leistungselektronische Vorrichtung, die auch als Leistungselektronik bezeichnet wird und neben dem Wechselrichter eine Halbbrücke aufweist, bezüglich dieser/dieses weiteren Energiespeicher/s, welche/r geladen werden/wird, die Funktionalität eines Gleichstromstellers aufweist, ohne dass die Leistungselektronik einen Gleichstromsteller umfasst.

Gemäß der vorliegenden Erfindung wird ein Schaltverfahren zum Betrieb der leistungselektronischen Vorrichtung nach dem einem Fachmann bekannten Prinzip der Raumzeiger-Modulation angewandt, bei dem durch einen Takt des Wechselrichters ein vorgegebener Raumzeiger durch Vektoraddition von Raumvektoren im Raumzeigermodell zur Erzeugung des Statordrehfelds eingestellt wird. Ferner wird während dieses Taktes des Wechselrichters ein erster Raumvektor für eine erste Schaltzeit eingestellt und während dieses Taktes des Wechselrichters der dem ersten Raumvektor diametral entgegengerichtete Stellvektor für eine zweite Schaltzeit eingestellt.

Darin liegt der besondere Vorteil, dass während eines Taktes die Stromrichtung in dem Statorstrang, der mit dem ersten Raumvektor korreliert, einerseits erhalten bleibt und andererseits die Stromrichtung zwischen der Halbbrücke und dem Inverter umgekehrt wird. Dies wird durch die Einstellung des dem ersten Raumvektor diametralen Raumvektors erreicht. Beide Raumvektoren tragen zur Addition aller während des Taktes eingestellten Vektoren bei, um einen für den betreffenden Takt vorgegebenen Raumzeiger zu erzeugen.

Ferner wird das Schaltverfahren der vorliegenden Erfindung dadurch charakterisiert, dass während der ersten Schaltzeit die Halbbrücke in einen ersten Zustand geschaltet wird, in welchem einer der mindestens zwei elektrischen Energiespeicher mit dem Wechselrichter verbunden ist, um diesen zu laden und, dass während der zweiten Schaltzeit die Halbbrücke in einen zweiten Zustand geschaltet wird, in welchem ein anderer der mindestens zwei elektrischen Energiespeicher mit dem Wechselrichter verbunden ist, um diesen zu laden.

Der besondere Vorteil besteht dabei darin, dass während des Taktes zwischen der Halbbrücke und dem Inverter ein Stromfluss in beide Stromrichtungen auftritt. Dabei kann der Strom, der mit der technischen Stromrichtung in Richtung des positiven Potentials zumindest eines elektrischen Energiespeichers korreliert ist, zum Laden dieses Energiespeichers genutzt werden, falls dieser mit der Halbbrücke leitend verbunden wird.

Gemäß einer weiteren Variante der vorliegenden Erfindung umfasst ein Kraftfahrzeug die leistungselektronische Vorrichtung, die elektrische Maschine und die elektrischen Energiespeicher. Die Leistungselektronik wird nach dem Schaltverfahren betrieben, um mindestens einen der elektrischen Energiespeicher gezielt zu laden.

Insbesondere für Hybrid- und Elektrofahrzeuge entsteht dabei der besondere Vorteil, dass eine bauraum- und gewichtsparende leistungselektronische Vorrichtung verbaubar ist, die die Funktionalität eines Inverters und eines Gleichstromstellers vereint. Um diesen Vorteil zu erzielen, wird die Leistungselektronik mit dem erfindungsgemäßen Schaltverfahren betrieben.

Die Erfindung beruht auf den nachfolgend dargelegten Überlegungen:

Hybrid- und Elektrofahrzeuge weisen heute meist eine Hochvoltbatterie mit einer Spannungslage von etwa 300 Volt bis 400 Volt und eine Niedervoltbatterie auf. Die Hochvoltbatterie ist über einen Inverter, d.h. einen Gleichrichter und/oder Wechselrichter an einen elektrischen Motor angebunden. Die Niedervoltbatterie speist das konventionelle 12 Volt-Bordnetz mit elektrischen Verbrauchern wie einem Radio, dem Abblendlicht usw. Aus der Hochvoltbatterie wird mittels eines DC/DC-Wandlers oder Gleichstromstellers die Niedervoltbatterie geladen. Heutige Hybridfahrzeuge weisen nach dem Stand der Technik einen Gleich- und/oder Wechselrichter und einen separaten DC/DC-Wandler auf. Außerdem gibt es Fahrzeugkonzepte bei denen zwei technologisch verschiedene elektrische Energiespeicher wie beispielsweise Doppelschichtkondensatoren, Lithium-Ionen-Batterien, Blei-Säure-Batterien oder Brennstoffzellen im Energiemanagement so kombiniert werden, dass deren spezifischen Vorteile genutzt werden können, die etwa in der Energiedichte oder der Leistungsdichte der jeweiligen Speicher begründet sein können. Eine mögliche Kombination wäre zum Beispiel ein elektrischer Speicher aus Doppelschichtkondensatoren, der kurzzeitig sehr hohe Leistungen abzugeben in der Lage ist und eine Lithium-Ionen-Batterie für die Bereitstellung von elektrischer Energie.

Daran ist nachteilig, dass aktuelle Hybrid- und Elektrofahrzeuge zwei separate Geräte umfassen, um ein optimales Energie- und Leistungsmanagement der elektrischen Speicher und der elektrischen Maschine zu ermöglichen. Da der Inverter und der DC/DC-Wandler bauartbedingt große Ähnlichkeiten aufweisen, wird ein Schaltverfahren für eine Schaltungsanordnung vorgeschlagen, die einen Inverter und einen Gleichstromsteller zusammenfasst und ein gezieltes Energie- und Leistungsmanagement der Speicher und der elektrischen Maschine ermöglicht.

Dabei wird der herkömmliche Inverter geringfügig in seinem Aufbau in der Art und Weise geändert, dass eine weitere Halbbrücke integriert wird. Wendet man auf dieses Verfahren ein bestimmtes Steuerverfahren des Inverters und der Halbbrücke an, das auf der Raumzeigermodulation basiert, ist gezielt elektrische Energie zwischen den elektrischen Energiespeichern transferierbar. Bei dem vorgeschlagenen Schaltverfahren werden im Vergleich zum herkömmlichen Schaltverfahren nach dem Stand der Technik lediglich zwei weitere Schaltflanken in den Inverterbrücken für jede Taktperiode benötigt, so dass auch zusätzliche Schaltverluste minimiert werden.

Die vorgeschlagene Maßnahme bietet den Vorteil, dass kein separater Gleichstromsteller verbaut werden muss, da dieser bei nur geringen Modifikationen in die Inverterelektronik integrierbar ist. Mit einer einzigen leistungselektronischen Baueinheit sind eine elektrische Maschine und zwei elektrische Speicher betreibbar. Insbesondere die elektrischen Energiespeicher sind ohne den Einsatz eines separaten Gleichstromstellers gezielt und nach einer vorgegebenen Betriebsstrategie ladbar und entladbar.

Die vorgeschlagene Maßnahme funktioniert sowohl bei stehendem als auch bei rotierender elektrischer Maschine. Außerdem ist das System bezüglich der Flussrichtung der elektrischen (Lade-)Leistung und den Spannungsniveaus nicht beschränkt, d.h. der Energietransport zwischen den Speicher kann zu jeder Zeit erfolgen, unabhängig von deren aktueller Spannungslage. Ein Hochsetzen oder Tiefsetzen kann wie bei der Verwendung eines Gleichstromstellers erfolgen. Das Verfahren verändert die Motorlage der elektrischen Maschine nicht, so dass der Betrieb der elektrischen Maschine unbeeinflusst bleibt. Die Integration des DC/DC-Wandlers in den Inverter ermöglicht den Entfall von elektrischen Bauteilen wie der Induktivität des DC/DC-Wandlers. Daraus folgen geringeres Gewicht, weniger Bauraumbedarf und geringere Kosten. Außerdem wird der Auslastungsgrad der elektrischen Maschine verbessert, da das Steuerverfahren im Vergleich zur herkömmlichen Steuerung weniger Nullvektorzeiten in Modell der Raumzeigermodulation vorsieht.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch

Fig. 1     Schaltungsanordnung der Leistungselektronik
Fig. 2     Konventionelles Steuerverfahren
Fig. 3     Neuartiges Steuerverfahren für positiven Phasenstrom
Fig. 4     Neuartiges Steuerverfahren für negativen Phasenstrom

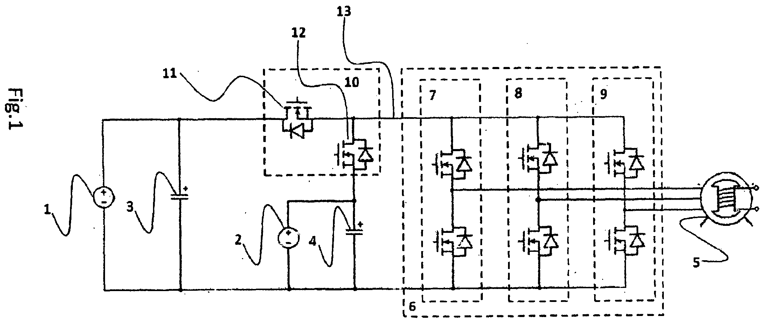

Fig. 1 zeigt schematisch und in einem Ausschnitt das Bordnetz eines Kraftfahrzeugs, insbesondere eines Hybrid- oder Elektrofahrzeugs. Das Bordnetz verfügt über einen ersten elektrischen Energiespeicher (1) und einen zweiten elektrischen Energiespeicher (2).

Beiden Energiespeichern kann jeweils ein Kondensator parallel geschaltet sein. Diese Kondensatoren werden als Zwischenkreiskondensatoren (3), (4) bezeichnet und dienen primär dem Puffern von Blindleistung, der Spannungsstabilisierung und dem Bauteilschutz.

Das Fahrzeug weist eine elektrische Maschine (5) auf, die motorisch oder generatorisch betreibbar ist. In diesem Ausführungsbeispiel wird in erster Linie der motorische Betrieb der elektrischen Maschine betrachtet. Bei der elektrischen Maschine kann es sich insbesondere um eine Drehstrom-Asynchronmaschine oder um eine permanent- oder fremderregte Synchronmaschine handeln.

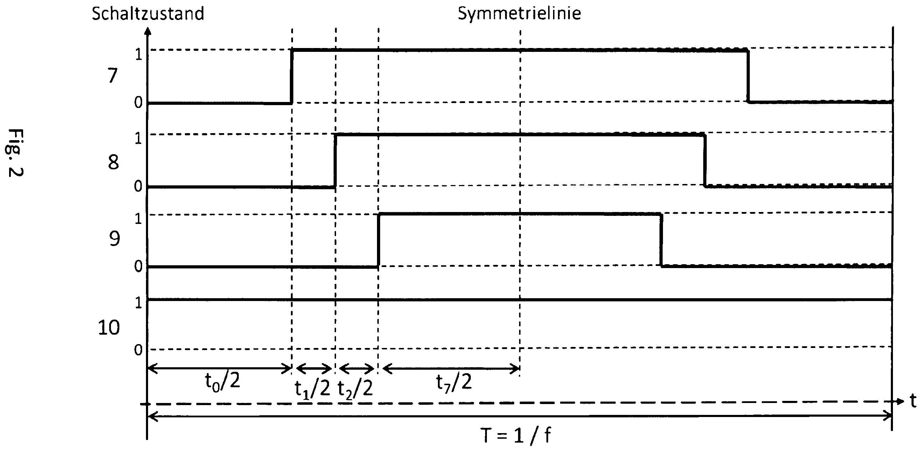

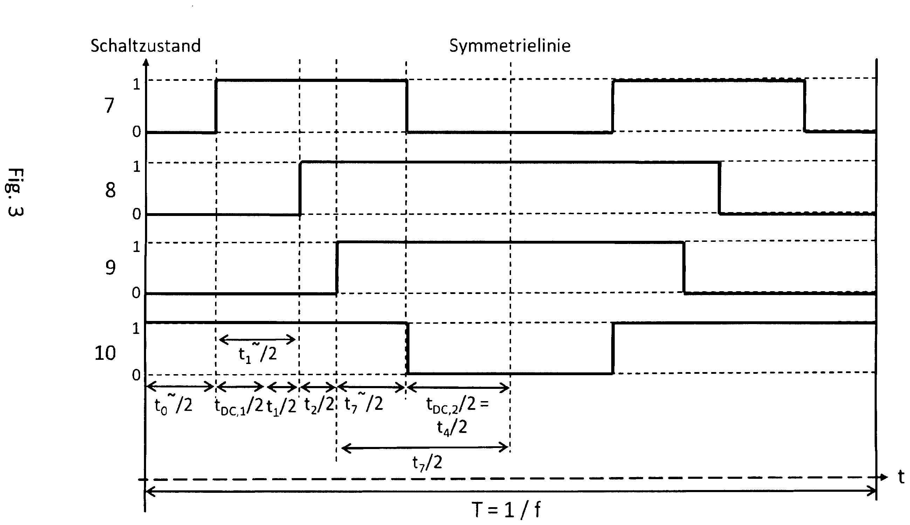

Der Dreiphasen-Wechselstrom, mit dem die elektrische Maschine gespeist wird, wird mit einem Inverter (6) zu einem bestimmten Zeitpunkt aus der Gleichspannung eines der beiden elektrischen Speicher (1) oder (2) erzeugt. Der Inverter, der auch als Wechselrichter bezeichnet wird, verfügt über drei parallel geschaltete Wechselrichterbrücken (7), (8) und (9). Dabei handelt es sich jeweils um eine Serienschaltungen aus zwei elektrischen Schaltern. Die elektrischen Schalter sind als steuerbare Schalter ausgeführt, beispielsweise als Transistoren, IGBTs oder als MOSFETs. Zu keinem Zeitpunkt sind entweder beide Schalter einer Wechselrichterbrücke geschlossen oder - vorbehaltlich einer Totzeit - beide Schalter geöffnet. Demzufolge kann jede Wechselrichterbrücke lediglich zwei Schaltzustände einnehmen, wobei ein Schaltzustand dadurch charakterisiert ist, dass einer der beiden Schalter geschlossen und der andere der beiden Schalter geöffnet ist. Jede Wechselrichterbrücke weist einen Mittenabgriff zwischen den beiden jeweiligen Schaltern auf. Die Mittenabgriffe sind mit den drei beispielsweise im Stern verschalteten Spulengruppen des Stators der elektrischen Maschine verbunden. Gemäß der dem Fachmann bekannten Nomenklatur für elektrische Maschinen wird der mit dem Mittenabgriff der ersten Wechselrichterbrücke (7) verbundene Pfad der elektrischen Maschine als Phase U, der mit dem Mittenabgriff der zweiten Wechselrichterbrücke (8) verbundene Pfad der elektrischen Maschine als Phase V und der mit dem Mittenabgriff der dritten Wechselrichterbrücke (9) verbundene Pfad der elektrischen Maschine als Phase W bezeichnet. Zwischen dem Pluspol des ersten Speichers und dem Inverter befindet sich eine weitere Schaltungsanordnung aus zwei Schaltern, die als Gleichstrombrücke (10) bezeichnet wird und als Halbbrücke fungiert. Die beiden Schalter werden als erster Halbbrückenschalter (11) und als zweiter Halbbrückenschalter (12) bezeichnet. Der Pfad zwischen der Gleichstrombrücke und dem Inverter wird als Gleichstrompfad (13) bezeichnet. Die Gleichstrombrücke nimmt in Abhängigkeit von den Schaltzuständen der beiden Halbbrückenschalter zwei Zustände ein. In diesen Zuständen ist jeweils einer der beiden Schalter der Halbbrücke geschlossen und der jeweils andere der beiden Schalter geöffnet. Es ist zu keiner Zeit ein Zustand vorgesehen, in dem entweder beide Schalter der Halbbrücke geschlossen oder - vorbehaltlich einer Totzeitbeide Schalter der Halbbrücke geöffnet sind. Bei einer bestimmten Ansteuerung des Inverters und der Gleichstrombrücke, die anhand der Fig. 2 und der Fig. 3 erläutert wird, kann die Induktivität der elektrischen Maschine wechselwirkend mit den Schaltzuständen der Gleichstrombrücke zielgerichtet zu Zuständen führen, in denen einer der beiden Speicher (1) oder (2) mit jeweils aus dem anderen der beiden Speicher (1) oder (2) entnommener Energie geladen wird. Da dies unabhängig von der Spannungslage der beiden Speicher erfolgt, entspricht dieses bestimmte Zusammenspiel der Gleichstrombrücke und der Induktivität der elektrischen Maschine der Funktionalität eines Gleichstromstellers. Die Vorteile einer derartigen Anordnung sind einerseits durch die niedrigeren Systemkosten begründet, da kein separater Gleichstromsteller im System befindlich ist. Dies äußert sich in weiteren Vorteilen wie der Ersparnis von Bauraum und Gewicht in einem Hybrid- oder Elektrofahrzeug.

Fig. 2 zeigt zunächst ein konventionelles Steuerverfahren für einen Inverter nach fachmännischer Kenntnislage, das auf der Raumzeigermodulation basiert, beispielhaft für einen bestimmten Steuerzeitpunkt. Es wird zunächst vereinfachend angenommen, dass die Spannung des ersten Speichers (1), $U_{DC,1}$, und die Spannung des zweiten Speichers (2), $U_{DC,2}$, identisch sind. Die Ansteuerung eines Inverters im Raumzeigermodell, das Teil einer feldorientierten Regelung der elektrischen Maschine ist, wird in diesem Dokument als dem Fachmann aus diesem technischen Gebiet bekannt vorausgesetzt. An der Abszisse in Fig. 2 ist die Zeit t angetragen. Die Taktzeit T ist der Taktfrequenz f des Inverters invers. An der Ordinate sind die Schaltzustände der drei Wechselrichterbrücken und der Gleichstrombrücke, die jeweils über zwei Zustände, die als 0 und 1 bezeichnet werden, angezeigt. Bei den drei Wechselrichterbrücken beschreibt der Zustand 1 jeweils den Zustand, bei dem der zwischen dem Gleichstrompfad (13) und dem jeweiligen Mittenabgriff liegende Schalter geschlossen ist. Im Zustand 0 ist dieser Schalter geöffnet und der Schalter zwischen dem Mittenabgriff und dem Minuspol des ersten Speichers (1) geschlossen. Da es sich bei Fig. 2 um ein pulsweitenmoduliertes Steuerverfahren handelt, befindet sich die Gleichstrombrücke stets in der Schaltposition 1, in der der erste Halbbrückenschalter (11) geschlossen und der zweite Halbbrückenschalter (12) geöffnet ist. Somit ereignet sich zu keinem Zeitpunkt während der Taktzeit T ein Fluss von elektrischer Leistung aus dem zweiten Speicher (2) oder in den zweiten Speicher (2). Ein Schalttakt in Fig. 2 ist zeitsymmetrisch ausgeführt. Dies ist durch die Symmetrieachse angezeigt. Die Schaltzeit $t_0/2$ beschreibt die Einstellung des Nullvektors $\mathbf{V}_0$, der dadurch bestimmt ist, dass bei den drei Wechselrichterbrücken der Zustand 0 eingestellt ist. Daran schließt sich der Schaltzeitraum $t_1/2$ an, in dem die Brücke (7) in den Zustand 1 geschaltet ist. In dem gewählten Raumzeigermodell entspricht dies zu diesem Zeitpunkt der Einstellung des Raumvektors 1, $\mathbf{V}_1$. Es folgt der Schaltzeitraum $t_2/2$, in dem auch die Brücke (8) in den Zustand 1 geschaltet ist. Dies entspricht der Einstellung des Raumvektors 2, $\mathbf{V}_2$. Im Schaltzeitraum $t_7/2$ sind die drei Brücken (7), (8) und (9) in den Zustand 1 geschaltet, was dem Nullvektor $\mathbf{V}_7$ entspricht. Bei Einstellung des Nullvektors $\mathbf{V}_7$ oder des Nullvektors $\mathbf{V}_0$ wird unter Vernachlässigung von Randeffekten keine Stromflussänderung in den Statorwicklungen bewirkt. Die Zeitdauer der Pulse $t_0$, $t_7$, $t_1$ und $t_2$ gehorcht dem Zusammenhang

$$T = t_0 + t_7 + t_1 + t_2.$$

Mit der Dauer von $t_1$ und $t_2$ ergibt sich der Punkt $\mathbf{P}_1$ im Raumzeigermodell nach

$$\mathbf{P}_1 = \mathbf{V}_1 \cdot t_1 + \mathbf{V}_2 \cdot t_2 + \mathbf{V}_0 \cdot t_0 + \mathbf{V}_7 \cdot t_7 = \mathbf{V}_1 \cdot t_1 + \mathbf{V}_2 \cdot t_2.$$

Fig. 3 beschreibt ein verbessertes Schaltprofil für eine Schaltungsanordnung gemäß Fig. 1. Analog zu dem in Fig. 2 beispielhaft gewählten Zeitpunkt für die Schaltzustände ist der Betrachtungszeitraum in Fig. 3 gewählt. Auch die elektrische Maschine wird in Fig. 3 als im gleichen Betriebszustand wie in Fig. 3 befindlich angenommen. In Fig. 3 wird mit der Vektoraddition im Raumzeigermodell der gleiche Punkt $\mathbf{P}_1$ wie in Fig. 2 beschrieben. Auch die Gleichstrombrücke (10) ist wie in Fig. 2 zu Beginn des Taktes in den Zustand 1 geschaltet. Zu Beginn eines Taktes wird in Fig. 3 für die Dauer der Schaltzeit $t_0\tilde{}/2 = t_0/2 - t_{DC,1}/2$ der Nullvektor $\mathbf{V}_0$ eingestellt, da die drei Brücken (7), (8) und (9) jeweils in den Zustand 0 geschaltet sind. Daran schließt sich ein Zeitraum $t_1\tilde{}/2 = t_1/2 + t_{DC,1}/2$ an, in dem die Wechselrichterbrücke (7) in den Zustand 1 geschaltet ist und die Gleichstrombrücke im Zustand 0 verbleibt. Darauf folgt der Schaltzeitraum $t_2/2$ in dem auch die Brücke (8) in den Zustand 1 geschaltet ist. Im weiteren zeitlichen Ablauf der Steuerung folgt der Schaltzeitraum $t_7\tilde{}/2 = t_7/2 - t_{DC,2}/2$ in dem der Nullvektor $\mathbf{V}_7$ eingestellt ist, da auch die Brücke (9) in den Zustand 1 geschaltet wird. Zu beachten ist, dass gilt $t_{DC,1} = t_{DC,2}$.

Zuletzt erfolgt die Schaltzeit $t_{DC,2}/2 = t_4/2$, in der die Brücke (7) in den Zustand 0 geschaltet ist und die Gleichstrombrücke in den Zustand 0 geschaltet ist. Damit wird der Vektor $\mathbf{V}_4$ eingestellt, der im Raumzeigermodell dem Vektor $\mathbf{V}_1$ diametral entgegengerichtet ist. Somit wird im Raumzeigermodell der Punkt $\mathbf{P}\tilde{}_1$ mit

$$\mathbf{P}\tilde{}_1 = \mathbf{V}_1 \cdot t_1\tilde{}/2 + \mathbf{V}_2 \cdot t_2 + \mathbf{V}_0 \cdot t_0\tilde{} + \mathbf{V}_7 \cdot t_7\tilde{} + \mathbf{V}_4 \cdot t_4$$

angesteuert. Mit den Beziehungen
$\mathbf{V}_4 = - \mathbf{V}_1$ und
$t_{DC,1} = t_{DC,2} = t_4$ sowie

$$t_1^{\sim} = t_1 + t_{DC,1} = t_1 + t_{DC,2} \text{ folgt,}$$

dass

$$\mathbf{P}_1^{\sim} = \mathbf{V}_1 \cdot t_1 + \mathbf{V}_1 \cdot t_{DC,2} + \mathbf{V}_2 \cdot t_2 + \mathbf{V}_0 \cdot t_0^{\sim} + \mathbf{V}_7 \cdot t_7^{\sim} - \mathbf{V}_1 \cdot t_{DC,2} = \mathbf{V}_1 \cdot t_1 + \mathbf{V}_2 \cdot t_2 = \mathbf{P}_1.$$

Daraus geht hervor, dass in dem in Fig. 3 schematisch dargestellten Takt effektiv der gleiche Punkt angesteuert wird wie in Fig. 2. Mit einfacheren Worten wird in Fig. 3 ausgehend von Fig. 2 die Pulsweite des Vektors $\mathbf{V}_1$ um den Schaltzeitraum $t_4$ verlängert. Im gleichen Zeitraum $t_4$ wird der dem Vektor $\mathbf{V}_1$ diametrale Vektor $\mathbf{V}_4$ angesteuert wird. Daraus folgt konsequenter Weise unter der gegebenen Bedingung, dass die Taktzeit T unverändert bleibt, dass die Schaltzeiten der Nullvektoren $\mathbf{V}_0$ und $\mathbf{V}_7$ um die doppelte Schaltzeit $t_4$ verkürzt werden müssen. Wesentlich an dem in Fig. 3 dargestellten Steuerverfahren ist, dass während des Schaltzeitraums $t_{DC,2}$, in dem der Vektor $\mathbf{V}_4$ eingestellt ist, die Stromrichtung im Gleichstrompfad (13) umgekehrt wird. Da im gleichen Zeitraum $t_{DC,2}$ die Gleichstrombrücke im Zustand 0 befindlich ist, d.h. der zweite Halbbrückenschalter (12) geschlossen und der erste Halbbrückenschalter (11) geöffnet ist, wird der Speicher (2) geladen. Die in den Speicher (2) ladbare Energie, die der elektrischen Maschine während der Schaltzeit $t_{DC,2}$ entnommen wird, wurde während der Schaltzeit $t_{DC,1}$ in die elektrische Maschine eingebracht. Somit ermöglicht das Schaltprofil nach Fig. 3 einen Leistungstransfer vom ersten elektrischen Speicher (1) in den zweiten elektrischen Speicher (2), der über die elektrische Maschine geführt wird. Dabei nimmt die Maschine jedoch zum Beginn und zum Ende des Taktzeitraums T den gleichen elektrischen und mechanischen Zustand ein wie in Fig. 2.

Besonders vorteilhaft an diesem Verfahren ist, dass der zweite Speicher (2) in Fig. 3 selbst unter der Bedingung geladen werden kann, dass die Spannungslage des zweiten Speichers (2) in Richtung höherer Spannungen im Vergleich zur Spannungslage des ersten Speichers (1) liegt. Vorausgesetzt ist hierbei jedoch, dass in der Gleichstrombrücke die Halbbrückenschalter (11) und (12) ohne eine Freilaufdiode ausgestaltet sind. Stattdessen können in beide Richtungen sperrende Schalter, wie etwa zwei antiseriell geschaltete MOSFETs mit Freilaufdioden unter dieser Voraussetzung eingesetzt werden. Auch IGBTs können beispielsweise zum Einsatz kommen. Zusammengefasst ermöglicht das Steuerverfahren nach Fig. 2 einen bidirektionalen Ladungstransfer zwischen den beiden elektrischen Energiespeichern (1) und (2) in einer der Verwendung eines Gleichstromstellers entsprechenden Art und Weise. Unabhängig von den einzelnen Spannungslagen der beiden Speicher (1) und (2) wird ein dem Fachmann bekannter 4-Quadranten-Betrieb der elektrischen Maschine ermöglicht.

Zusammengefasst ermöglicht die Taktabfolge nach Fig. 3 in Bezug auf den ersten Speicher (1) und den zweiten Speicher (2) eine funktionale Nachbildung eines Gleichstromstellers mit Hilfe der Induktivität der E-Maschine (5) und der Gleichstrombrücke (10).

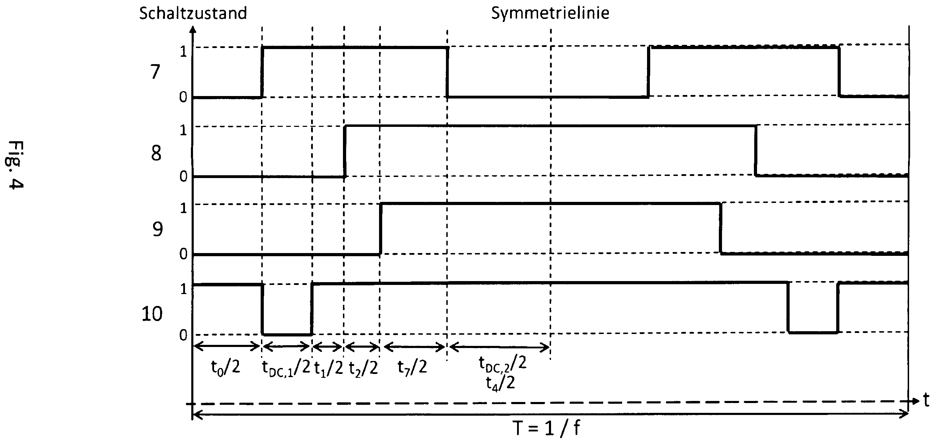

Fig. 3 unterliegt der Annahme, dass zu Beginn des gezeigten Taktzeitraums T der Strom in der Phase U, der als $I_U$ bezeichnet wird, der Beziehung $I_U > 0$ gehorcht, falls der Vektor $\mathbf{V}_1$ eingestellt ist, und dass der zweite Speicher (2) vom ersten Speicher (1) geladen werden soll. Falls der zweite Speicher (2) jedoch vom ersten Speicher (1) geladen werden soll und bei der Einstellung von Vektor $\mathbf{V}_1$ gilt $I_U < 0$, wird das Schaltprofil nach Fig. 4 angewandt. Das Schaltprofil in Fig. 4 unterscheidet sich vom Schaltprofil in Fig. 3 dadurch, dass die Gleichstrombrücke nicht im Schaltzeitraum $t_{DC,2}$, in welchem der Vektor $\mathbf{V}_4$ eingestellt wird, in den Zustand 0 geschaltet wird, da während $t_{DC,2}$ gilt, dass $I_U > 0$. In diesem Zeitraum wird in Fig. 4 die elektrische Energie in die elektrische Maschine transferiert, die im Zeitraum $t_{DC,1}$ entnommen wird, wenn der Vektor $\mathbf{V}_1$ mit $I_U < 0$ eingestellt ist, wobei wiederum gilt, dass $t_{DC,1} = t_{DC,2}$. Falls elektrische Energie in umgekehrter Weise eine Umladung vom zweiten Speicher (2) in den ersten Speicher (1) erfolgen soll, wird bei $I_U > 0$ für Vektor $\mathbf{V}_1$ nicht das Schaltprofil nach Fig. 3, sondern das Schaltprofil nach Fig. 4 angewandt. Falls eine Umladung von Speicher (2) in den Speicher (1) erfolgen soll und bei der Einstellung von Vektor $\mathbf{V}_1$ gilt $I_U < 0$, muss das Schaltprofil nach Fig. 3 angewandt werden. Die Möglichkeit, einen der beiden elektrischen Energiespeicher (1) oder (2) mit aus dem jeweils anderen Energiespeicher der beiden Energiespeicher zu laden, ist unabhängig davon, welche der beiden Spannungen $U_{DC,1}$ und $U_{DC,2}$ eine höhere Spannungslage gegen eine gemeinsame Masse aufweist. Außerdem ist die Spezifikation der beiden elektrischen Energiespeicher unwesentlich. Es kann sich bei beiden Speichern beispielsweise um eine Lithium-Ionen-Batterie in Hochvoltlage oder um einen Niedervoltspeicher handeln, z.B. eine 12V-Blei-Säure-Batterie oder einen Doppelschichtkodensator. Sofern keine galvanische Trennung der Speicher erforderlich ist, ist auch eine beliebige Kombination aus einem Hochvoltspeicher und einem Niedervoltspeicher möglich.

Ergänzend ist zu bemerken, dass das Ausführungsbeispiel nicht auf die Verwendung einer E-Maschine als Last für den Inverter beschränkt ist. Es kann auch andere induktive Last wie etwa ein Transformator zum Einsatz kommen.

Es ist weiterhin bemerkenswert, dass die Zeit $T_{DC}$ zur gezielten Regelung der Ladespannung eines Speichers als Sollgröße analog zur Steuerung bzw. Regelung eines DC/DC-Wandlers dient. Die Zeit $T_{DC}$ entspricht der Summe aus den beiden Einzelzeiten $T_{DC} = t_{DC,1} + T_{DC,2}$.

Mit $t_{DC,1} = t_{DC,2}$ ergibt sich für $T_{DC} = 2 \cdot t_{DC,1}$. Weiterhin gilt als Randbedingung für die zulässige Taktzeit $T = t_0 + t_7 + t_1 + t_2 + t_{DC,1} + t_{DC,2} = t_0 + t_7 + t_1 + t_2 + T_{DC}$, so dass $T_{DC}$ bis zu einer maximalen Dauer verlängerbar ist, bei der der Wert der Summe der Nullzeiten $t_0 + t_7$ verschwindet. Als weitere Randbedingung ist zu beachten, dass ein vorgegebener Punkt $P_1$ im Raumzeigermodell eingestellt wird. Mit Hilfe eines stetigen Reglers wie zum Beispiel eines PI-Reglers sind somit die Spannung und der Energietransfer des Speichers (1) oder (2) gezielt beeinflussbar.

Das Ausführungsbeispiel unterliegt der Annahme, dass die Spannungen der Speicher (1) und (2) gleich sind $U_{DC,1} = U_{DC,2}$. Damit gilt auch $t_{DC,1} = t_{DC,2}$. Im Allgemeinen ist dies jedoch nicht der Fall, da die beiden Speicher (1) und (2) mit unterschiedlichen Spannungslagen gekoppelt werden. Da das Raumzeigermodell üblicherweise auf die Zwischenkreisspannung normiert wird, bedeutet dies beispielsweise in Fig. 3, dass das Produkt $t_1 \cdot V_1$ und somit der resultierende Raumzeiger von der Länge des eingestellten Raumvektors $V_1$ abhängig ist. Im Fall von Fig. 3 ist dies gleichbedeutend mit einer Abhängigkeit von der Spannung des ersten Speichers (1), $U_{DC,1}$. Entsprechend gilt für den Vektor $V_4 = - V_1 \cdot U_{DC,2}/ U_{DC,1}$. Demzufolge sind, um weiterhin den vorgegebenen Punkt $P_1$ im Raumzeigermodell einzustellen und den Speicher (2) zu laden, die Zeiten $t_{DC,1}$ und $t_{DC,2}$ entsprechend der Spannungen der Speicher, $U_{DC,1}$ und $U_{DC,2}$, ins Verhältnis zu setzen nach $t_{DC,1} \cdot U_{DC,1} = t_{DC,2} \cdot U_{DC,2}$. Ist die Spannung des zweiten Speichers (2) zum Beispiel mit $U_{DC,2} = 12$ Volt gegeben und die Spannung des ersten Speichers (1) mit $U_{DC,1} = 60$ V gegeben, so gilt: $t_{DC,2} = 5 \cdot t_{DC,1}$. Wegen $t_{DC,1} \neq t_{DC,2}$ werden die Nullzeiten $t_0\tilde{}$ und $t_7\tilde{}$, für die stets die Symmetriebedingung $t_0\tilde{} = t_7\tilde{}$ eingehalten sein sollte, berechnet nach

$$t_0\tilde{} = t_7\tilde{} = (t_0 + t_7 - T_{DC}) / 2 = (2 \cdot t_0 - T_{DC}) / 2 = t_0 - T_{DC} / 2$$

, wobei $T_{DC} = t_{DC,1} + t_{DC,2}$.

Diese Beziehungen führen für den Punkt $P\tilde{}_1$ zu:

$P\tilde{}_1 = V_1 \cdot t_1 + V_1 \cdot t_{DC,1} + V_2 \cdot t_2 + V_0 \cdot t_0\tilde{} + V_7 \cdot t_7\tilde{} + V_4 \cdot t_{DC,2} = = P\tilde{}_1 = V_1 \cdot t_1 + V_1 \cdot t_{DC,1} + V_2 \cdot t_2 + (- V_1 \cdot U_{DC,2}/ U_{DC,1}) \cdot (t_{DC,1} \cdot U_{DC,1} / U_{DC,2}) = P_1$. Mit dieser konkreten Weiterbildung von Fig. 3 und Fig. 4 wird auch bei abweichender Spannungslage der vorgegebene Raumzeiger $P_1$ eingestellt und ein Energiespeicher gemäß der Beschreibung von Fig. 3 und Fig. 4 geladen.

In der Schrift DE 10 2008 037 064 A1 wird ein Verfahren beschrieben, nach dem zwei Halbbrückenschalter in einer dem Ausführungsbeispiel in Fig. 1 vergleichbaren Schaltungsanordnung mit zwei elektrischen Energiespeichern und einer elektrischen Maschine im Wesentlichen pulsweitenmoduliert nach Fig. 2 angesteuert werden. Mit einem solchen Verfahren ist eine Ladung eines bestimmten Speichers über ein zeitliches Mittel des Betriebs der elektrischen Maschine erreichbar. Gegenüber diesem Verfahren bietet das Steuerverfahren nach Fig. 3 und Fig. 4 den Vorteil, dass ein gezieltes Energiemanagement der Energiespeicher gewährleistbar ist. Da bei einer elektrischen Maschine die Stromrichtung im Gleichstrompfad (13) bei dem konventionellen Schaltverfahren nach Fig. 2 abhängig vom Maschinenzustand veränderlich ist, muss die Steuerung der Halbbrücke abhängig von der Stromrichtung im Gleichstrompfad erfolgen, um eine gezielte Speicherladung zu ermöglichen. Andernfalls würde eine unvermittelte Stromumkehr zu Spannungsinstabilitäten führen, die als Über- oder Unterspannungen etwaige angeschlossene Komponenten stören oder gar schädigen könnten (z.B. Steuergeräte oder unidirektional betriebene Brennstoffzellen). Zur Verhinderung solcher Störungen oder Schädigungen können zwar Pufferspeicher zum Einsatz kommen, ein kontinuierlicher Ladebetrieb ist unter diesen Bedingungen jedoch nicht möglich. Insbesondere würde es außerdem zu unnötigen Leistungsverlusten aufgrund von auftretender Blindleistung führen kommen. Falls zum Beispiel der Halbbrückenzweig (12) für eine bestimmte Schaltzeit, in der Strom im Gleichstrompfad die Stromrichtung ändert, geschlossen ist, ist auch dann der auftretende Blindstrom erheblich, wenn sich über ein zeitliches Mittel ein Ladestrom in den Speicher einstellt. Ein weiterer Vorteil des Steuerverfahrens nach Fig. 3 und Fig. 4 äußert sich in der Reduzierung der Schaltzeiten der Nullvektoren. Dadurch wird dem System mehr Leistung zugeführt, ohne die eigentliche Funktionalität negativ zu beeinflussen. Der zusätzliche Leistungsfluss bedeutet eine höhere Auslastung des Systems. Unabhängig von der Spannungsdifferenz der beiden Energiespeicher (1) und (2) ermöglicht das Steuerverfahren nach Fig. 3 und Fig. 4 die Einstellung eines vorgegebenen Punkts $P_1$ im Raumzeigermodell. Bei einem einfachen pulsweitenmodulierten Verfahren ohne Einstellung zweier diametraler Vektoren innerhalb eines Taktes kann eine hohe Spannungsdifferenz zwischen den Speichern dazu führen, dass eine einzustellende Spannung an dem Speicher mit der höheren Spannungslage nur einstellbar ist, wenn ein von dem Punkt $P_1$ abweichender Punkt im Raumzeigermodell eingestellt wird. Drehungleichförmigkeiten oder Drehmomentverluste an der elektrischen Maschine wären die Folge.

**Bezugszeichenliste**

| 1 | Erster elektrischer Energiespeicher |
| 2 | Zweiter elektrischer Energiespeicher |
| 3 | Erster Zwischenkreiskondensator |
| 4 | Zweiter Zwischenkreiskondensator |
| 5 | Elektrische Maschine |
| 6 | Inverter |
| 7 | Erste Wechselrichterbrücke |
| 8 | Zweite Wechselrichterbrücke |
| 9 | Dritte Wechselrichterbrücke |
| 10 | Gleichstrombrücke |
| 11 | Erster Halbbrückenschalter |
| 12 | Zweiter Halbbrückenschalter |
| 13 | Gleichstrompfad |
| $I_U$ | Strom der Phase U |
| t | Zeit |
| T | Taktzeit |
| f | Taktfrequenz |
| $V_0$ | Raumvektor 0, Nullvektor |
| $V_7$ | Raumvektor 7, Nullvektor |
| $V_1$ | Raumvektor 1 |
| $V_2$ | Raumvektor 2 |
| $P_1$ | Punkt $P_1$ im Raumzeigermodell |
| $P_1\sim$ | Punkt $P_1\sim$ im Raumzeigermodell |
| $t_0$ | eine Schaltzeit von $V_0$ |
| $t_0\sim$ | eine Schaltzeit von $V_0$ |
| $t_1$ | eine Schaltzeit von $V_1$ |
| $t_1\sim$ | eine Schaltzeit von $V_1$ |
| $t_2$ | eine Schaltzeit von $V_2$ |
| $t_2\sim$ | eine Schaltzeit von $V_2$ |
| $t_4$ | Schaltzeit von $V_4$ |
| $t_7$ | eine Schaltzeit von $V_7$ |
| $t_7\sim$ | eine Schaltzeit von $V_7$ |
| $t_{DC,1}$ | erste Ladezeit |
| $t_{DC,2}$ | zweite Ladezeit |
| $T_{DC}$ | gesamte Ladezeit |
| $U_{DC,1}$ | Spannungslage des ersten elektrischen Energiespeichers |
| $U_{DC,2}$ | Spannungslage des zweiten elektrischen Energiespeichers |
| U | Phase U |
| V | Phase V |
| W | Phase W |

**Patentansprüche**

1. Leistungselektronische Vorrichtung, umfassend einen Wechselrichter (6), an den eine elektrische Maschine (5) anschließbar ist, und zumindest eine Halbbrücke (10) mit zwei Halbbrückenschaltern (11, 12), sowie mindestens zwei elektrische Energiespeicher (1, 2), die an die Halbbrücke angeschlossen sind, wobei

- die zumindest eine Halbbrücke sich zwischen einem der mindestens zwei elektrischen Energiespeicher und dem Wechselrichter befindet,
**dadurch gekennzeichnet, dass**
- die leistungselektronische Vorrichtung eingerichtet ist, die zumindest eine Halbbrücke zwischen zwei Zuständen zu schalten, wobei jeweils einer der beiden Halbbrückenschalter geschlossen und der jeweils andere der beiden Halbbrückenschalter geöffnet ist, um jeweils einen der mindestens zwei elektrischen Energiespeicher mit dem Wechselrichter zu verbinden, so dass
- die elektrische Maschine durch mindestens einen der mindestens zwei elektrischen Energiespeicher zumindest zeitweise versorgbar ist, und mindestens einer der elektrischen Energiespeicher zumindest zweitweise durch mindestens einen weiteren Energiespeicher der mindestens zwei elektrischen Energiespeicher über die elektrische Maschine und zumindest der Halbbrücke ladbar ist.

2. Schaltverfahren zum Betrieb der leistungselektronischen Vorrichtung nach Anspruch 1 nach dem Prinzip der Raumzeigermodulation,
   **dadurch gekennzeichnet, dass**

   - durch einen Takt des Wechselrichters ein vorgegebener Raumzeiger durch Vektoraddition von Raumvektoren im Raumzeigermodell eingestellt wird,
   - während dieses Taktes des Wechselrichters ein erster Raumvektor für eine erste Schaltzeit eingestellt wird,
   - während dieses Taktes des Wechselrichters der dem ersten Raumvektor diametrale Raumvektor für eine zweite Schaltzeit eingestellt wird,
   - dass während der ersten Schaltzeit die Halbbrücke in einen ersten Zustand geschaltet wird, in welchem einer der mindestens zwei elektrischen Energiespeicher mit dem Wechselrichter verbunden ist, um diesen zu laden und
   - dass während der zweiten Schaltzeit die Halbbrücke in einen zweiten Zustand geschaltet wird, in welchem ein anderer der mindestens zwei elektrischen Energiespeicher mit dem Wechselrichter verbunden ist, um diesen zu laden.

3. Schaltverfahren nach Anspruch 2,
   **dadurch gekennzeichnet,**

   - **dass** das Verhältnis zwischen der ersten Schaltzeit und der zweiten Schaltzeit bestimmt wird in Abhängigkeit von dem Verhältnis zwischen der Spannungslage des zu ladenenden Energiespeichers und der Spannungslage des Energiespeichers, der die höchste Spannungslage der ladenden Energiespeicher aufweist.

4. Kraftfahrzeug, das die leistungselektronische Vorrichtung nach Anspruch 1 und eine elektrische Maschine umfasst, wobei die leistungselektronische Vorrichtung nach dem Schaltverfahren gemäß Anspruch 3 betreibbar ist.

**Claims**

1. Power electronics apparatus, comprising an inverter (6), to which an electric machine (5) can be connected, and at least one half-bridge (10) with two half-bridge switches (11, 12), and at least two electrical energy stores (1, 2), which are connected to the half-bridge, wherein

   - the at least one half-bridge is disposed between one of the at least two electrical energy stores and the inverter,
   **characterised in that**
   - the power electronics apparatus is designed to switch the at least one half-bridge between two states, wherein in each case one of the two half-bridge switches is closed and the other of the two half-bridge switches is open so as to connect one of the at least two electrical energy stores to the inverter, such that
   - the electric machine can be supplied at least temporarily by at least one of the at least two electrical energy stores, and at least one of the electrical energy stores can be charged at least temporarily by at least one further energy store of the at least two electrical energy stores via the electric machine and at least one half-bridge.

2. A switching method for operating the power electronics apparatus according to claim 1 in accordance with the space vector modulation principle,
   **characterised in that**

   - as a result of a clock pulse of the inverter, a predefined space vector is set by vector addition of space vectors in the space vector model,
   - during this clock pulse of the inverter, a first space vector is set for a first switching time,
   - during this clock pulse of the inverter, the space vector diametrically opposite the first space vector is set for a second switching time,
   - during the first switching time, the half-bridge is switched into a first state, in which one of the at least two electrical energy stores is connected to the inverter for charging, and
   - during the second switching time, the half-bridge is switched into a second state, in which another of the at least two electrical energy stores is connected to the inverter for charging.

**3.** A switching method according to claim 2,
**characterised in that**

- the ratio between the first switching time and the second switching time is determined depending on the ratio between the voltage position of the energy store to be charged and the voltage position of the energy store that has the highest voltage position of the charging energy stores.

**4.** A motor vehicle having the power electronics device according to claim 1 and an electric machine, wherein the power electronics device can be operated in accordance with the switching method according to claim 3.

**Revendications**

**1.** Dispositif électronique de puissance comprenant un onduleur (6) sur lequel peut être branchée une machine électrique (5), et au moins un demi pont (10) ayant deux commutateurs de demi pont (11, 12), ainsi qu'au moins deux accumulateurs d'énergie électrique (1, 2) qui sont branchés sur le demi pont.
le demi pont étant situé entre l'un des accumulateurs d'énergie électrique et l'onduleur,
**caractérisé en ce que**
le dispositif électronique de puissance est susceptible de commuter le demi pont entre deux états, l'un des deux commutateurs de demi pont étant respectivement fermé et l'autre commutateur de demi pont étant respectivement ouvert pour relier respectivement l'un des deux accumulateurs d'énergie électrique à l'onduleur de sorte que la machine électrique puisse être alimentée au moins par intermittence par au moins l'un des accumulateurs d'énergie électrique et qu'au moins l'un des accumulateurs d'énergie électrique puisse être chargé au moins par intermittence par au moins un autre accumulateur d'énergie électrique par l'intermédiaire de la machine électrique et du demi pont.

**2.** Procédé de commutation permettant de faire fonctionner un dispositif électronique de puissance conforme à la revendication 1,
selon le principe de la modulation vectorielle dans l'espace,
**caractérisé en ce qu'**
une horloge de l'onduleur permet de régler un vecteur spatial prédéfini par addition vectorielle de vecteurs spatiaux dans le modèle de vecteurs spatiaux,
pendant cette horloge de l'onduleur, un premier vecteur spatial est réglé pour un premier temps de commutation,
pendant cette horloge de l'onduleur le vecteur spatial diamétralement opposé au premier vecteur spatial est réglé pour un second temps de commutation,
pendant le premier temps de commutation le demi pont est commuté dans un premier état dans lequel l'un des deux accumulateurs d'énergie électrique est relié à l'onduleur pour le charger, et
pendant le second temps de commutation le demi pont est commuté dans un second état dans lequel l'autre accumulateur d'énergie électrique est relié à l'onduleur pour le charger.

**3.** Procédé de commutation conforme à la revendication 2,
**caractérisé en ce que**
le rapport entre le premier temps de commutation et le second temps de commutation est déterminé en fonction du rapport entre l'état de tension de l'accumulateur d'énergie électrique à charger et l'état de tension de l'accumulateur d'énergie à l'état de tension le plus élevé des accumulateurs d'énergie en charge.

**4.** Véhicule comportant un dispositif électronique de puissance conforme à la revendication 1,
et un moteur électrique, le dispositif électronique de puissance pouvant être actionné par la mise en oeuvre du procédé de commutation conforme à la revendication 3.

Fig.1

Fig. 2

Fig. 3

Symmetrielinie

Schaltzustand

$t_0/2$ $t_{DC,1}/2$ $t_1/2$ $t_2/2$ $t_7/2$ $t_{DC,2}/2$ $t_4/2$

$T = 1/f$

t

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037064 A1

**In der Beschreibung aufgeführte Nicht-Patentliteratur**

- **LU et al.** A new method of utilizing ultra-capacitor energy sources in hybrid electric vehicles over a wide speed range. *Applied Power Electronics Conference, AEPC 2007, 22nd Annual IEEE,* 2007, 222-228